Europäisches Patentamt

European Patent Office

Office européen des brevets

(19)

(11) Publication number: **0 083 410**
**B1**

(12) # EUROPEAN PATENT SPECIFICATION

(45) Date of publication of patent specification: **19.02.86**

(51) Int. Cl.⁴: **B 25 J 19/00,** G 01 L 5/22

(21) Application number: **82110352.0**

(22) Date of filing: **10.11.82**

(54) **Multiple degree of freedom compliance structure.**

(30) Priority: **31.12.81 US 336487**

(43) Date of publication of application:
**13.07.83 Bulletin 83/28**

(45) Publication of the grant of the patent:
**19.02.86 Bulletin 86/08**

(84) Designated Contracting States:
**CH DE FR GB IT LI**

(56) References cited:
**GB-A-2 060 204**
**US-A-3 948 093**
**US-A-4 132 318**

**IBM TECHNICAL DISCLOSURE BULLETIN, vol.
24, no. 2, July 1981, pages 1086-1088, New
York (USA); A.E. BRENNEMANN et al.: "Sensor
arrangement for a manipulator gripper"**

**IBM TECHNICAL DISCLOSURE BULLETIN, vol.
24, no. 4, September 1981, pages 1982-1983,
New York (USA); D.D. GROSSMAN: "Two-
dimensional compliant device for robot sensor"**

(73) Proprietor: **International Business Machines
Corporation
Old Orchard Road
Armonk, N.Y. 10504 (US)**

(72) Inventor: **Fischer, Friedrich Lorenz
340 Barway Drive
Yorktown Heights New York 10598 (US)**

(74) Representative: **Ahlman, Bertel et al
IBM Svenska AB Box 962
S-18 109 Lidingö (SE)**

Courier Press, Leamington Spa, England.

## Description

The present invention relates to multiple degree of freedom compliance structures. Such structures are used primarily in the field of robotics for mounting the gripper fingers on the end of an hydraulic manipulator arm. In such robotic manipulators, it is desirable to have a compliant structure interposed between the manipulator arm and a gripper to reduce shocks to the extremely expensive hydraulic systems of the manipulator itself either due to collision of the manipulator with other objects or when excessive forces are applied via the hydraulic system to an object being gripped. It is also desirable that such forces be resolved to the manipulator structure orthogonally, because the mechanism may better be designed to resist such forces rather than directly applied diagonal, nonorthogonal forces.

It is usually necessary with most complex robotic manipulators, accurately to sense the forces applied to the gripper fingers, whereby appropriate control signals may be fed back to the hydraulic control mechanisms which control the overall robotic system operation.

US—A—4,132,318, DE—A—2754436, FR—A—2375962 and GB—A—1569348 disclose a multiple degree of freedom compliant structure comprising three separate I-beam modules to resolve and/or measure forces with X-Y-Z orthoganality.

US—A—3,948,093 which discloses the features of the precharacterising part of claim 1, DE—A—2628701, FR—A—2316589 and GB—A—1489040 disclose a similar compliant structure made up of separate I-beam components to resolve X-Y-Z force orthoganality.

The structures disclosed, while capable of resolving or yielding orthogonally to the X, Y and Z forces are neither symmetrical nor compact. Further, there is a tendency for the primary mounting surface for each of the I-beam elements to rotate when a force is applied to the element normal to the plane of the I-beam web.

Another multiple degree of freedom compliant structure for such manipulators, disclosed in an article in the IBM Technical Disclosure. Bulletin, Volume 24, No. 2, July 1981, pp. 1086 to 1088, includes a two sided box-beam structure for three individual force resolving elements in place of the I-beam structure of the above referenced patents. The structure is neither symmetrical nor compact. Further, the attachment surfaces of the structure are not parallel to the portions of the box-beam structures joined by resilient webs.

The invention seeks to provide a compliant structure which is extremely compact and inexpensive to manufacture, preferably by injection moulding techniques.

The invention also seeks to provide a compliant structure which is mechanically symmetrical and which greatly simplifies installation.

Such a compliant structure is particularly adapted for mounting gripper fingers on a robotic manipulator and resolves a force vector applied to the gripper finger into the three orthogonal force components, substantially free of any rotational moments.

The present invention is disclosed in the attached claims.

The invention is hereinafter particularly described with reference to the accompanying drawings, in which:

Fig. 1 is a perspective view of a compliance structure according to the present invention interposed between the arm of a robotic manipulator and a gripper finger which would grasp a workpiece;

Fig. 2 is an exploded perspective view of a compliance structure similar to that of Fig. 1;

Fig. 3 is a side elevational view of the compliance structure of Fig. 1;

Fig. 4 is an end elevational view of the compliance structure of Fig. 1;

Fig. 5 is a side view of a single compliance element of the compliance structures, illustrating the action of the element when a force is applied; and

Fig. 6 is a perspective view of a symmetrical two-degree of freedom compliance structure, constructed in accordance with the teachings of the present invention.

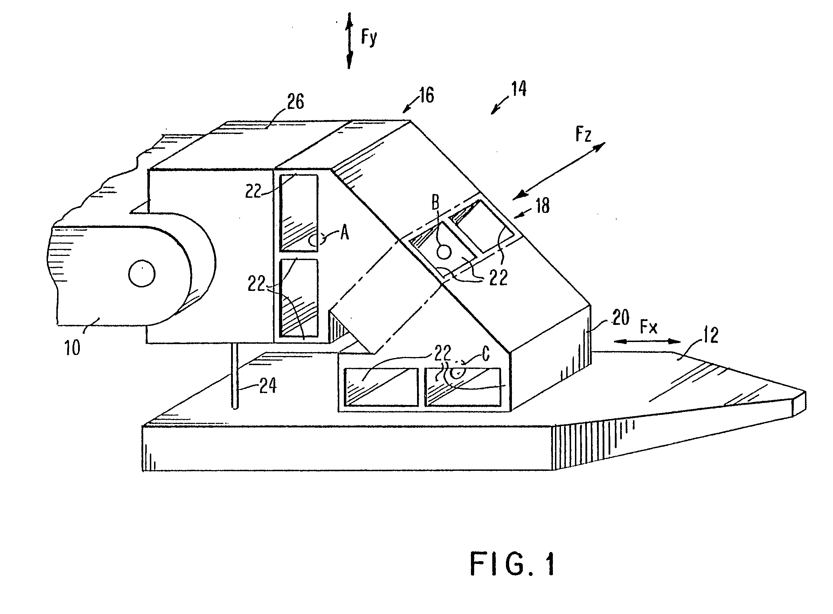

A manipulator arm 10 (Fig. 1) and a gripper finger 12 have a three-degree of freedom compliance structure 14 according to the present invention, interposed therebetween. Three orthogonal force vectors, $F_x$, $F_y$, and $F_z$ are shown in relationship to the individual force resolving elements 16, 18 and 20, making up the compliance structure 14. It should be clearly understood that while the force vectors $F_x$, $F_y$ and $F_z$ are shown adjacent to the elements 16, 18 and 20 for clarity, the device resolves force vectors applied to the gripper finger 12 and not applied to the elements *per se*.

In the embodiment of Fig. 1, each of the individual compliance elements 16, 18 and 20 includes three thin equally spaced resilient webs 22. It will be understood that at least two resilient webs are needed, and that more than three may be used.

When an external force, such as represented by vector $F_y$, is applied to gripper finger 12, the individual webs 22 in compliance element 16 would flex. As a result, the planar regions or portions of the individual elements to which the webs 22 are attached at their ends, will move slightly relative to each other. The same action will occur in element 18 when a force represented by vector $F_z$ is applied to gripper finger 12 and in element 20 when a force represented by vector $F_x$ is applied to finger 12. It will also be apparent that if a force vector $F_v$ is applied to the finger 12 which is a composite of all three orthogonal force vectors $F_x$, $F_y$ and $F_z$, each of the elements 16, 18 and 20 will individually resolve only that portion of the composite vector which affects its own permitted direction of resolution.

Before proceeding further with a detailed description of the compliance structure, a brief description will follow of two possible methods of measuring the orthogonal forces applied to the system. The present compliance structure may serve two purposes, the first being to provide a means for resolving and subsequently measuring the orthogonal forces applied to the structure which, as will be readily understood, provides a means for controlling the hydraulic mechanism. The second function is the ready adaptability of the presently disclosed compliance structure to act as a mechanical fuse or link which can be designed to take loads up to a certain point but which will then act as a mechanical fuse and break when a specified load is exceeded.

One method of measuring the forces is illustrated by three strain gauges A, B and C, mounted on the central webs 22 of each of the compliance elements, 16, 18 and 20, respectively. These are conventional foil strain gauges which would normally be mounted at the maximum point of deflection in each of the flexible web sections. The strain gauges could be electrically connected to form a bridge circuit. Deflection of a web would cause a stress in the relevant gauge which in turn, would be detected as an unbalance in the bridge circuit.

An alternative method of mechanically sensing the motion, could comprise attaching a fixed rod 24 rigidly to the gripper finger 12, which rod extends into a detection assembly (not shown) located within a protective housing 26 on the manipulator arm. It will be readily appreciated that the displacement of the rod 24 projecting into the housing 26 will be of the same relative magnitude and direction as the remainder of the gripper finger due to the application of a force thereto. The deflection in any of the three possible orthogonal directions will thus be fed to the detection assembly in the housing 26. Any one of a variety of known methods for measuring displacement such as air gap, Hall effect, optical, could be used readily. The particular manner in which orthogonal displacements are measured is not specifically relevant to the present invention and will not be described in further detail as it is considered to be state of the art.

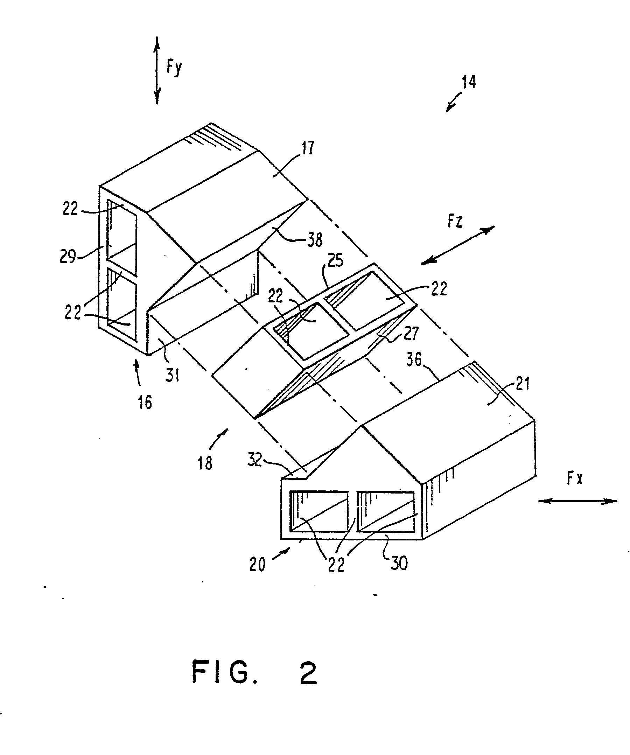

Referring now to Fig. 2, the three-degree of freedom compliance structure 14 is shown in exploded form. This figure serves also to illustrate at least two alternative methods for manufacturing and assembling the overall three-degree of freedom compliance structure. The element 18 is a basic element consisting of three webs 22 between sides 25 and 27. The webs 22 of the element 18 are normal to the direction of the vector $F_z$. The element 16 includes a basic element consisting of three webs 22 between sides 29 and 31, and a wedge shaped portion 17 forming an integral part of the side 31. The webs 22 of the element 16 are normal to the direction of the vector $F_y$. The wedge shaped portion 17 has a planar face 38 complementary to the side 25 of the element 18. The element 20 includes a basic element consisting of three webs 22 between sides 30 and 32, and a wedge shaped portion 21 forming an integral part of the side 32. The webs 22 of the element 20 are normal to the direction of the vector $F_x$. The compliance elements 16 and 20 are identical, but one is merely turned over and through a right angle. The wedge angle of the portions 17 and 21 is 45° and the forces 36 and 38 and the sides are square. Therefore, by utilizing two identical elements 16 and 20, together with the basic element 18, the overall structure may be formed by attaching element 16 to element 18 with the planar face 38 and side 25 forming bonding surfaces and by attaching element 20 to element 18 with the planar face 36 and side 27 forming bonding surfaces. Thus, two relatively simple structures need to be manufactured to make the substantially more complex three-degree of freedom compliance structure.

The wedge shaped portions 17 and 21, which are identical, could be separately fabricated and all three of the individual compliance elements 16, 18 and 20 would be identical which might represent a still further saving in manufacturing cost. It is, however, to be noted that when a suitable plastic material such as polycarbonate is used to form the structure by appropriate injecting moulding processes, it is preferred to make the complete three-degree of freedom compliance structure as a single integral unit the webs 22 of the element 18 extending between the faces 38 and 36 of the wedge shaped portions 17 and 21.

Whether integral or separate, the sides of the basic elements or the faces to which the webs 22 attach form planar regions which are highly resistive to any force normal to the webs to which they attach. The term planar region, when used in the context of a single element, refers to the substantially planar portion of the overall compliance structure within each single compliance element to which the end of the webs are attached. These planar regions move relative to each other when a force is applied to a particular element normal to the plane of said webs. Thus, in the case of the composite structure as shown in Fig. 1, the interior planar regions of elements 16 and 20 in both surfaces of element 18 are, in effect, integral with the overall structure whereas the outer planar regions of sides 29 and 30 (Fig. 2) are actual attaching or mounting surfaces by which the overall compliance structure is attached to or incorporated in the overall robotic mechanism.

Figure 2 serves to show more clearly the symmetry of the structure. The overall structure could be mounted with the planar region of either side 29 or 30 attached to the manipulator arm 10 and the other surface attached to the gripper finger 12. This feature further simplifies orientation and attachment of the device to the robotic mechanism, it being noted that if the device were not symmetrical and it were inadvertently attached incorrectly, it could cause severe operating problems.

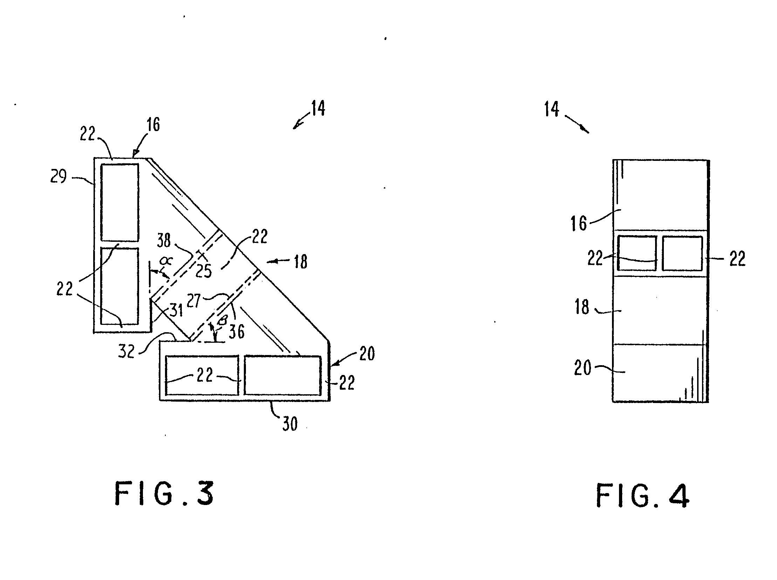

With the three individual elements 16, 18 and 20 (Fig. 3) disposed as shown with respect to each other, the two elements 16 and 20 are so oriented that the respective planar regions of their sides 29 and 31, and 32 and 30 respectively, are perpendicular, and the planes including the individual webs 22 of each device are also perpendicular.

The planar regions of the sides 25 and 27 of the element 18 are disposed at acute angles to the planar regions of the sides 31 and 32 of elements 16 and 20. These two acute angles (α and β) are substantially equal i.e., 45 degrees, as shown, so that the structure is symmetrical. However even if different angles are selected, the structure can remain substantially symmetrical.

The planes of the individual webs 22 of the element 18 (Fig. 4) are also perpendicular to the planes of the webs 22 of both end elements 16 and 20.

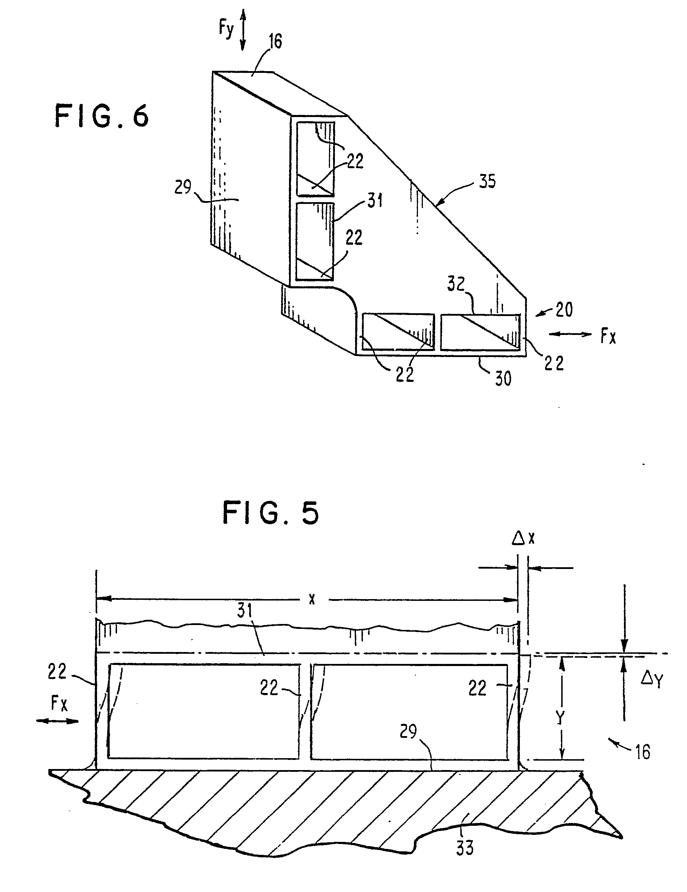

The enlarged diagram (Fig. 5) of a single basic compliance element, in this case 16, shows, in exaggerated form, the operation of the compliance element under the application of a transverse force, in this case in the direction of vector $F_x$. The element at rest is in solid lines whereas the element, in the deformed condition, which it would assume under the application of the force, is shown in dotted lines. The planar region of the side 29 is securely attached to the surface of a boxy 33, representing the arm 10 or finger 12, by gluing, or the like, and hence, cannot flex. Similarly, the side 31 is secured to or integral with the wedge shaped portion 17, a portion of the overall structure, and cannot flex. The basic element 16 operates and performes like a parallelogram. That is, as a force is applied, the two planar regions of sides 31 and 32, remain substantially parallel but move parallel to each other by an amount $\Delta X$. The two planar regions of the sides 31 and 32 will also move together by an amount $\Delta Y$. However, this movement $\Delta Y$ is much less than the movement $\Delta X$ as will be appreciated from the geometry of the figure.

In a working model of the present invention, a compliance device was made of Lexan, which is registered trademark of the General Electric Company, which name is specific to their polycarbonate material. A deflection ($\Delta X$) of approximately 127 µm (5 mils) occurred under a transverse force of 2.268kg (5 lbs). In this working model the dimension X was 22.225 mm (0.875 inches) and the dimension Y was 5.1562 mm (0.203 inches). The thickness of the individual webs was 0.6096 mm (0.024 inches) and the depth of the overall device was approximately 12.7 mm (0.5 inches).

By eliminating the compliance element 18, a two-degree of freedom symmetrical compliance structure (Fig. 6) may be constructed in accordance with the teachings of the present invention. In Fig. 6 the same reference numerals used as in Figures 1 to 4 for convenience of reference. The wedge shaped portions 17 and 21 are replaced by a single wedge 35. All the elements perform in exactly the same manner as in the embodiment of Fig. 1. The only difference is the elimination of the function of the element 18 which would resolve the third orthogonal component of force ($F_z$). As with the embodiment of Fig. 1, the preferred method of making the device of Fig. 6 is by injection moulding of the material such as polycarbonate, nylon.

The preferred form of the invention comprises fabricating the three-degree of freedom symmetrical compliance structure from as single block of plastics material such as polycarbonate by, for example, an injection moulding process.

As will be apparent, the overall structure could alternatively be machined from a composite block of either polycarbonate or some sort of metal or even be fabricated by a plurality of process steps. In such cases, the individual resilient webs might be separately manufactured and mounted in grooves machined in supporting structures as will be apparent. However, the overall geometry and symmetry of the device, as disclosed, would have to be maintained to achieve the hereindescribed results.

In summary, the invention as described is a unitary compact structure comprising at least two and preferably three individual compliant elements, each of which is disposed within the structure to resolve an applied force into one of three orthogonal force vectors. Each of the elements comprises two spaced parallel rectangular planar regions joined at two of their opposite corresponding outer edges by thin resilient web sections which are parallel to each other and perpendicular to the planar regions. Preferably, at least one additional resilient web section is located intermediate to the other two web sections. The elements are arranged in the structure so that two of the elements form the respective ends of the structure and are so oriented in the structure that both their planar regions and the individual resilient web sections of each structure are perpendicular to each other. The third element, in the preferred embodiment of the invention, is located within the composite structure intermediate the other two elements and is oriented so that its planar region is disposed at an angle of approximately 45 degrees with respect to the planar regions of both of the other two elements and the planes of the resilient web sections of the third element are perpendicular to the planes of the resilient web sections of the two other members.

It will be appreciated from the description that the interior planar regions of the two end elements and both planar regions of the intermediate element merge into and become a unitary part of the overall assembly, especially when the entire assembly is formed as a unitary structure by an injection moulding operation, or the like. The exterior planar regions of the two end elements are, the mounting surfaces for the structure.

The present compliance structure is primarily adapted for use in robotic manipulators and the structure serves not only as a means for measuring the three orthogonal forces which can be applied to such a structure but can also serve as, in effect, a mechanical fuse which will preferentially break before damage to the underlying robotic structure or workpiece can occur.

The primary advantages of the structure are that it is extremely compact and inexpensive to manufacture, especially when made as a unitary (single process) moulded structure. Even in composite form the device is essentially modular and may be assembled easily from basic components.

Due to its low cost, it is readily expendable and may be replaced easily with a minimum of time and difficulty. Due to its inherent geometrical symmetry it is virtually impossible to mount it incorrectly. Further, when manufactured of a suitable plastics material, such as polycarbonate, the structure is both an insulator and nonmagnetic.

**Claims**

1. A multiple degree of freedom compliance structure (14), which structure is substantially symmetrical, comprising first and second individual compliant elements (16, 20), each of which is disposed within the structure to resolve an applied force into one of two orthogonal force vectors, said elements being located at either end (10, 12) of the structure at substantial right angles to each other, each of the elements comprising two spaced planar portions (29, 31, 30, 32), and a third compliance element (18, 35) located intermediate the two other elements, characterized in that the planar portions (29, 31, 30, 32) in said first and second elements are joined by two spaced thin resilient webs (22) which are parallel to each other and substantially perpendicular to the planar portions which they join, the first and second elements (16, 20) being disposed so that the planar portions of the elements are substantially perpendicular to each other and the planes of the resilient webs of the elements are substantially perpendicular to each other.

2. A structure according to claim 1, in which the third element (18) is so oriented that planar portions (25, 27) of this intermediate element form an acute angle with respect to the planar portions of the other two elements and that the planes of resilient webs of the intermediate element are substantially perpendicular to the planes of the resilient webs of both the other two elements.

3. A structure according to claim 2, in which the acute angle formed by the orientation of the planar portions of the intermediate element (18) with those of the planar portions of the other two elements (16, 20) is approximately 45 degrees.

4. A structure according to claim 1, 2 or 3, in which the structure is constructed of a single integral body of a plastics material formed by moulding.

5. A structure according to claim 1, 2 or 4, in which each of the two compliant elements (16, 20) has an attachment surface on and parallel to the planar portions for attachment of the structure between two perpendicularly disposed members which are to be mechanically interconnected, whereby the directions of compliance of the elements are so oriented with respect to each other that the elements will resolve any force applied to one end of the structure with respect to the other along three orthogonally disposed axes.

6. A structure according to any preceding claim, in which each of the compliance elements includes a third resilient web interconnecting the planar portions and evenly spaced between the two webs, whereby as a transverse force is applied to the element parallel to the planar portions causing the webs to flex, the planar portions remain substantially parallel.

7. A structure according to any preceding claim, in which a strain sensor (A, B, C) is mounted on a web of one or more of the elements.

**Patentansprüche**

1. In mehreren Freiheitsgraden nachgiebiger Aufbau (14), welcher im wesentlichen symmetrisch ist und ein erstes und zweites einzelnes nachgiebiges Element (16, 20), von denen jedes innerhalb des Aufbaus so angeordnet ist, daß es eine ausgeübte Kraft in einen von zwei orthogonalen Kraftvektoren auflöst, wobei die Elemente an den beiden Enden (10, 12) des Aufbaus unter einem im wesentlichen rechten Winkel zueinander angeordnet sind, wobei jedes der Elemente zwei im Abstand liegende ebene Abschnitte (29, 31, 30, 32) aufweist, und ein zwischen den beiden anderen Elementen liegendes drittes nachgiebiges Element (18, 35) umfaßt, dadurch gekennzeichnet, daß die ebenen Abschnitte (29, 31, 30, 32) des ersten und des zweiten Elements durch zwei im Abstand liegende dünne elastiche Stege (22) verbunden sing, welche zueinander parallel und im wesentlichen senkrecht zu den ebenen Abschnitten, welche sie verbinden, sind, wobei das erste und das zweite Element (16, 20) so angeordnet sind, daß die ebenen Abschnitte der Elemente im wesentlichen senkrecht zueinander sind und die Ebenen der elastichen Stege der Elemente im wesentlichen senkrecht zueinander sind.

2. Aufbau nach Anspruch 1, bei welchem das dritte Element (18) so orientiert ist, daß ebene Abschnitte (25, 27) dieses Zwischenelements einen spitzen Winkel in Bezug auf die ebenen Abschnitte der anderen beiden Elemente bilden und daß die Ebenen von elastischen Stegen des Zwischenelements im wesentlichen senkrecht zu den Ebenen der Elastichen Stege der beiden anderen Elemente sind.

3. Aufbau nach Anspruch 2, bei welchem der spitze Winkel, der durch die Orientierung der ebenen Abschnitte des Zwischenelements (18) zu denjenigen der ebenen Abschnitte der beiden anderen Elemente (16, 20) gebildet wird, ungefähr 45 Grad beträgt.

4. Aufbau nach Anspruch 1, 2 oder 3, bei welchem der Aufbau durch einen einzigen integralen Körper aus durch Formguß gebildeten Kunststoff hergestellt ist.

5. Aufbau nach Anspruch 1, 2 oder 4, bei welchem jedes der beiden nachgiebigen Elemente (16, 20) auf und parallel zu den ebenen Abschnitten eine Anbringungsfläche zur Anbringung des Aufbaus zwischen zwei mechanisch zu verbindenden senkrecht angeordneten Teilen aufweist, wodurch die Nachgiebigkeitsrichtungen der Elemente bezüglich einander so orientiert sind, daß die Elemente eine auf ein Ende des Aufbaus ausgeübt Kraft in Bezug auf das andere längs dreier orthogonal angeordneter Achsen auflösen.

6. Aufbau nach irgend einem vorstehenden Anspruch, bei welchem jedes der nachgiebigen Elemente einen die ebenen Abschnitte verbindenden und im gleichen Abstand zwischen den beiden Stegen angeordneten dritten elastischen Steg enthält, wodurch bei Ausübung einer Querkraft auf das Element parallel zu den ebenen Abschnitten, welche eine Biegung der Stege bewirkt, die ebenen Abschnitte im wesentlichen parallel bleiben.

7. Aufbau nach irgend einem vorstehenden Anspruch, bei welchem ein Dehnungssensor (A, B, C) auf einem Steg eines oder mehrerer der Elemente angebracht ist.

**Revendications**

1. Un dispositif d'accouplement souple à plusieurs degrés de liberté (14), ledit dispositif étant sensiblement symétrique et comprenant des premier et second éléments individuels d'accouplement souple (16, 20) qui sont chacun disposés à l'intérieur du dispositif pour résoudre une force appliquée en un de deux vecteurs-forces orthogonaux, lesdits éléments étant placés à chaque extrémité (10, 12) du dispositif sensiblement perpendiculairement entre eux, chacun des éléments comprenant deux parties planes espacées (29, 31, 30, 32), et un troisième élément d'accouplement souple (18, 25) placé entre les deux autres éléments, caractérisé en ce que les parties planes (29, 31, 30, 32) desdits premier et second éléments sont jointes par deux âmes élastiques, minces, espacées (22) qui sont parallèles entre elles et sensiblement perpendiculaires aux parties planes qu'elles joignent, le premier et le second élément (16, 20) étant disposés de telle sorte que les parties planes des éléments soient sensiblement perpendiculaires entre elles et que les plans des âmes élastiques des éléments soient sensiblement perpendiculaires entre elles.

2. Un dispositif selon la revendication 1, dans lequel le troisième élément (18) est orienté de telle sorte que des parties planes (25, 27) de cet élément intermédiaire fassent un angle aigu avec les parties planes des deux autres éléments et que les plans des âmes élastiques de l'élément intermédiaire soient sensiblement perpendiculaires aux plans des âmes élastiques des deux autres éléments.

3. Un dispositif selon la revendication 2, dans lequel l'angle aigu formé par l'orientation des des parties planes de l'élément intermédiaire (18) avec celles des parties planes des deux autres éléments (16, 20) est approximativement de 45°.

4. Un dispositif selon la revendication 1, 2 ou 3, dans lequel le dispositif est constitué d'un seul corps monobloc en matière plastique formé par moulage.

5. Un dispositif selon la revendication 1, 2 ou 4, dans lequel chacun des deux éléments d'accouplement souple (16, 20) comporte une surface de fixation parallèle aux parties planes pour une fixation du dispositif entre deux éléments disposés perpendiculairement et qui doivent être accouplés mécaniquement entre eux, les directions d'accouplement des éléments étant orientées l'une par rapport à l'autre de telle sorte que les éléments résolvent une force appliquée à une extrémité du dispositif par rapport à l'autre le long de trois axes disposés orthogonalement.

6. Un dispositif selon une quelconque des revendications précédentes, dans lequel chacun des éléments d'accouplement comprend une troisième âme élastique assurant la liaison des parties planes et uniformément espacée des deux âmes entre lesquelles elle est placée de manière que, lorsqu'une force transversale est appliquée à l'élément parallèlement aux parties planes produisant une flexion des âmes, les parties planes restent sensiblement parallèles.

7. Un dispositif selon une quelconque des revendications précédentes, dans lequel un détecteur de contrainte (A, B, C) est monté sur une âme d'un ou plusieurs des éléments.

FIG. 1

FIG. 2

FIG. 4

FIG. 3

# FIG. 6

# FIG. 5